# EUROPEAN PATENT APPLICATION

(11) **EP 4 492 844 A1**
(43) Date of publication of application: **15.01.2025**
(21) Application number: 23315275.0
(22) Date of filing: 11.07.2023
(51) Int. Cl.: H04W 12/30, H04W 4/50, H04W 8/20, H04W 8/18, H04W 36/00

(54) **A SYSTEM AND METHOD FOR ACTIVATING A PROFILE OF A CONNECTED DEVICE**

(71) Applicant: THALES DIS FRANCE SAS, 92190 Meudon (FR)
(72) Inventor: Win, Tint Lwin Lwin, 541295 SINGAPORE (SG); Foo, Seck Yong, 730587 SINGAPORE (SG); Guillaud, Christophe, 13011 MARSEILLE (FR)
(74) Representative: Lotaut, Yacine Diaw

(57) **Abstract**

A method for activating a profile of a connected device of a user is disclosed. The method includes transmitting, by the service provider, a resource address to the user; accessing, by the connected device, the resource address; launching, by the connected device, an application; downloading to the mobile device, by the application, a profile; and activating on the mobile device, by the application, the profile.

## Description

### BACKGROUND

Connected devices may have the ability to access network services provided by a mobile network operator (MNO). The connected device may access the network by using a parameter, which is part of a profile stored by the connected device, that authenticates or authorizes the connection. Examples of parameters include credential keys, serial numbers, International Mobile Subscriber Identity (IMSI), and other associated data. The profile may be included as part of a secure element (SE), a tamper-resistant processor chip or secure component. Examples of SEs include a subscriber identity module (SIM), which may be a physical apparatus that is linked with the connected device, or an embedded SIM (eSIM), which may be integrated into the connected device. Prior to using the credentials of the profile, the connected device may be required to activate the profile and/or to update profile data included in the SE.

### SUMMARY

The disclosure pertains to a method for activating a profile of a connected device of a user, comprising transmitting, by the service provider, a resource address to the user; accessing, by the connected device, the resource address; launching, by the connected device, an application; downloading to the mobile device, by the application, a profile; and activating on the mobile device, by the application, the profile.

This process allows a better and more convenient way of downloading and/or activating an eSIM-subscription profile. Since the process is being carried out within the target device, there is no need for another medium to be introduced into the process in order to carry out the activation; for instance, when a QR code is used as the activation link, then the QR code must be printed or displayed on another device in order to allow the connected device to scan the QR code. Thus, the method of the present disclosure is seamless and provides a good user experience for the end user.

In an aspect of the disclosure, the resource address is a deeplink.

In an aspect of the disclosure, the resource address is sent to the connected device using a personal information of the user.

In an aspect of the disclosure, the resource address is received directly to the connected device as a web page, mobile application, e-mail, or SMS.

. In an aspect of the disclosure, the resource address is accessible on a screen of the connected device.

In an aspect of the disclosure, the connected device is configured to connected to a first network, and the profile is for connecting to a second network.

In an aspect of the disclosure, the method is triggered by the service provider receiving information that a user of the connected device wants the connected device to connect to the second network.

In an aspect of the disclosure, the service provider is a mobile network operator.

In an aspect of the disclosure, the service provider is separate from a mobile network operator.

In an aspect of the disclosure, the connected device automatically accesses the resource address when the resource address is received by the connected device.

In an aspect of the disclosure, the resource address is accessed by the connected device after an initiation action by the user without the need for an intermediary or third party device to facilitate access to the resource address by the connected device.

In an aspect of the disclosure, the application is a local profile assistant.

An aspect of the disclosure is directed toward a system comprising a connected device and a backend server, wherein the system is configured to activate a profile on the connected device.

In an aspect of the disclosure, the backend server is operated by a service provider.

In an aspect of the disclosure, the service provider is a mobile network operator.

### BRIEF DESCRIPTION OF THE DRAWINGS

FIG. 1 is an exemplary illustration of a system according to the present disclosure.
FIG. 2 is an exemplary illustration of a method according to the present disclosure.
FIG. 3 is an exemplary illustration of a sequence according to the present disclosure.
FIG. 4 is an exemplary illustration of a mobile device according to the present disclosure.

### DETAILED DESCRIPTION OF THE INVENTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. For example, a particular feature, structure, or characteristic described herein in connection with one embodiment may be implemented within other embodiments without departing from the spirit and scope of the invention. In addition, it is to be understood that the location or arrangement of individual elements within each disclosed embodiment may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

The following description includes references to various methods executed by a processor of an integrated circuit chip. As is common in the field, there may be phrases herein that indicate these methods or method steps are performed by software instructions or software modules. As a person skilled in the art knows, such descriptions should be taken to mean that a processor, in fact, executes the methods, software instructions, and software modules.

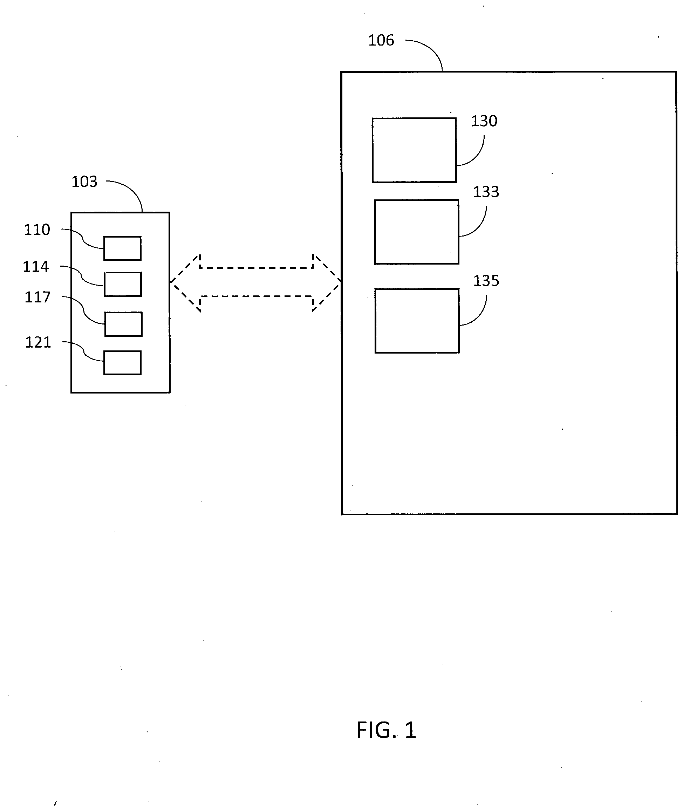

An aspect of the present disclosure is related to a system for activating a profile of a connected device. An exemplary connected device 103 and backend server 106 is demonstrated by FIG. 1. The connected device 103 can communicate with the backend server 106 through any of one or more different cellular wireless network technologies.

The connected device 103 may be a computing device such as a laptop computer, a tablet, a telephone, a media player, or other portable electronic device, a wearable device, a headphone, an embedded device, a television, a gaming device, a navigation device, equipment that implements the functionality of two or more of these devices, or other electronic equipment. Also considered are any other type of electronic computing device having wireless communication capability that can include communication via one or more wireless communication protocols such as used for communication on: a wireless wide area network (WWAN), a wireless metro area network (WMAN) a wireless local area network (WLAN), a wireless personal area network (WPAN), a near field communication (NFC), a cellular wireless network, a fourth generation (4G) Long Term Evolution (LTE), LTE Advanced (LTE-A), fifth generation (5G), and/or sixth generation (6G) or other present or future developed advanced cellular wireless networks. Other types of network-linked systems and devices are considered as well, such as, for instance, vehicles and M2M devices, so long as they are providing an interface to interact with an end-user and a network connection.

The connected device 103 includes a control center 110, a user interface 114, a communication system 117, and a secure element 121. These components may work together to enable the connected device 103 to provide useful features to a user of the connected device 103, such as electronic communication, localized computing, location based services, and Internet connectivity. It is conceived that any or all of the control center 110, the user interface 114, the communication system 117, and the secure element 121 may be located within or connected to a single connected device 103; alternatively, or additionally, these elements may be contained or connected to any number of separate or linked connected devices 103. In such a case, the connected devices 103 may make their individual functions available to each other.

The control center 110 may include storage and processing circuitry for supporting the operation of connected device 103. The storage and processing circuitry may include storage such as hard disk drive storage, nonvolatile memory, volatile memory, etc. Processing circuitry in the control center 110 may be used to control the operation of device 103. The processing circuitry may be based on one or more microprocessors, microcontrollers, digital signal processors, baseband processors, power management units, audio chips, application specific integrated circuits, etc.

The user interface 114 may allow the user to interact with the connected device 103. For instance, user interface 114 may be a display screen that allows the user to see text, images, videos, and other data contained by or streamed to the connected device 103. The user interface 114 may have an input capability, such as a keyboard and/or touch screen, allowing the user to interact with data presented on the user interface 114.

The connected device 103 may have a communication system 117 that is configured to enable the communication between the connected device 103 and the backend server 106. The communication system 117 may provide connectivity channels for receiving and transmitting information. The communication system 117 may represent, for example, one or more network interface cards (NIC) or a network controller as well as associated communication protocols. The communication system 117 may include several types of interfaces, including but not limited to, a wireless local area network (WLAN) interface, a local area network (LAN) interface, a wide area network (WAN) interface, a multimedia message service (MMS), and a short message service (SMS) interface. Hence, the communication system 117 may communicate with the backend server 106 through any number and form of intermediaries, e.g., the communication system 117 may communicate with a LAN, and the LAN may communicate with the backend server 106. The communication system 117 may be capable of producing a secure channel with the backend server 106, such as, for example, using encryption at the connected device 103 to prevent unauthorized access to data transmitted and/or received by the connected device 103.

The SE 121 can be configured to store one or more SIMs and/or eSIMs, such as for access to services of different MNOs. SIMs stored on the SE 121 can be updated, modified, activated, deactivated, and/or deleted via communication between the SE 121 and the backend server 106. In an aspect, SIMs may be pre-stored in the SE 121 in an inactive state and later activated.

The backend server 106 may have storage and modules that provide needed functionality. For instance, a server control module 130 may be dedicated to controlling various aspects of the operation of the backend server 106. A module may be dedicated to communication, such as a server communication system 133, which may be capable of communication with the connected device 103, for example, using a secure channel. Another module may be a provisioning module 133 (or other equivalent or similar network-based SIM management entities, such as a remote SIM provisioning platform (SM-DP+)). The provisioning module 133 may enable a SE 121 to access services provided by an MNO, such as by providing to the SE 121 a profile allowing the connected device 103 to use a network operated by the MNO. The backend server 106 may be a single server, or several servers that work together, such as to provide the named functionality. In such a case, the several servers may be remote from each other. The backend server 106 may be operated and/or maintained by an MNO, a manufacturer of the connected device 103, a service provider, a third party entity, or the like. It is further noted that various aspects and functionalities of the backend server 106 may be operated and/or maintained by various parties, either working together or separately.

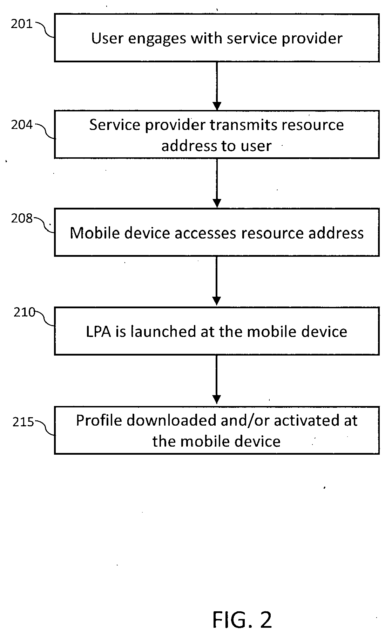

An aspect of the present disclosure is directed toward a method for activating a profile of a connected device 103. An exemplary flowchart of such a process is show in FIG. 2. In step 201, a user may contract with an MNO to gain access to a network of the MNO. The contract may be related to a specific device, several devices, for a specific user, for a different user, for several users, and/or generally to gain access to the network. The user may contract directly with the MNO and/or through an intermediary.

In step 204, The MNO may transmit to the user a resource address. The MNO may transmit the resource address in relation to the contract; for instance, the resource address may be transmitted upon or after the contract with the user is finalized. Alternatively, or additionally, the resource may be transmitted to the user by the operator at any time in the process, such as from the prompting of the MNO. The resource address may be transmitted directly and/or through an intermediary.

The resource address may be transmitted by any of a number of methods. For instance, the resource address may be transmitted by the MNO "digitally," such as via e-mail, electronic text messaging (such as short messaging service, or SMS), web page, web link, a web application, a mobile application, wireless communication, wired communication, or other related methods and/or technologies. Alternatively, or additionally, the resource address may be transmitted by physical means, such as physical print-out and/or by courier service. In an aspect of the disclosure, the resource address is delivered directly to the connected device 103 of the user.

The resource address may be, for example, an HTML hyperlink that points the user a specific web page, resource, database, data, object, graphic, text, or other related type of digital information. In an aspect of the disclosure, the resource address may be a specific piece of web content on a website accessible directly via the resource address, such that the web content may be searchable and/or indexable, also known as a deeplink. The deeplink may be persistent, meaning that the content of the deeplink may remain until otherwise removed, such as during or after the activation process.

The resource address may be directly accessible by the connected device 103 of the user. For example, the resource address and/or a link leading to the resource address may be displayed on the screen of the connected device 103, or otherwise can be input therein, such that the user may conduct an initiation action to direct the connected device 103 to access the resource address, such as by following the link from within the ordinary operation of the connected device 103 without the need for an intermediary or third party device to facilitate access to the resource address by the connected device. Thus, the resource address may be sent directly from the service provider to the connected device 103 of the user on which the new profile is to be activated. In an aspect of the disclosure, the connected device 103 may detect that the resource address has been received by the connected device 103.

In step 204, the connected device may access the resource address. For example, when the resource address is received by the user, the user may direct the connected device 103 to invoke the resource address. The connected device 103 may be configured to automatically access the resource address upon detection of receipt, such as without intervention by the user. In step 210, invoking the resource address may cause a local profile assistant (LPA) to launch at the connected device 103 of the user. The LPA may be a set of functions in the connected device 103 responsible for providing the capability to download encrypted Profiles to the SE. The resource address may launch the LPA upon receipt of the resource address by the device, upon selection of the resource address by the user on the connected device 103 (so as to direct the connected device 103 to go to the resource address), and/or at another point during the activation process. For example, the LPA may be configured to detect that a download link for a profile has been received and then launch a download and/or activation procedure.

The resource address may contain a profile information related to the user contract, or other data related to the profile and/or the user contract. In step 215, The LPA may then download the profile information and activate the profile on the SE in accordance with the values passed from the resource address. Once the profile is activated by the LPA, the connected device 103 may then be usable by the user on the network of the MNO.

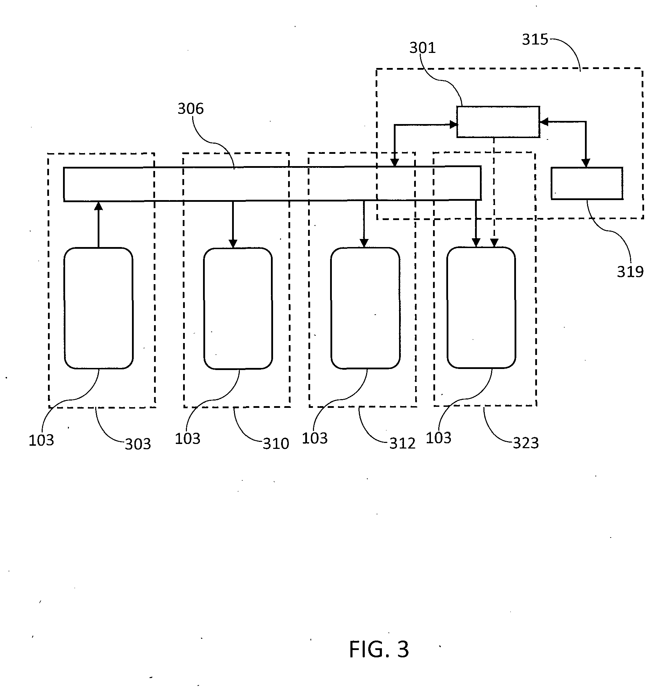

FIG 3. demonstrates an example sequence of an implementation of the present disclosure. A user may desire to use a network outside of their currently utilized network provided by the MNO 301 such as, for instance, when a user travels to another country. In 303, the user may express this ' desire to a service provider 306. The service provider 306 may be the MNO 301 or a separate entity from the MNO 301..

In 310, the user may be offered a package that includes network connectivity access to a different network for the user and/or the connected device 103, such as a network that serves the travel destination. The package may be offered by the service provider 306; for instance, the package may be offered during the sales process for the travel, such as by the hotel and/or transportation provider, and/or the offering of the package to the user by the MNO 301 or other entity may be triggered by the booking of the travel by the user.

In 312, the service provider may request a personal contact data of the user. The personal contact data may be an e-mail address, mail address, phone number, or other data needed to facilitate communication with the user. In an instance where the service provider 306 is other than the MNO 301, the personal contact data of the user may be shared with the MNO 301. Alternatively, or additionally, the service provider 306 may ask the user to use and/or share the personal contact data of the user that is already known to the service provider 306. It is considered that the MNO 301 may utilize a personal contact data that the MNO 301 has previously received permission for.

When the MNO 301 determines that the user will desire to connect to the different network, such as when the service provider 306 has informed the MNO 301 that the user has accepted the offer of the package, when the user shares the personal contact data, or at any other point during or anticipation of the process, the MNO 301 may initiate the creation of the new profile for the user, as in 315. The new profile may be associated with an identification information of the user and/or the connected device 103 of the user. For instance, the new profile may be associated with an Integrated Circuit Card Identification number (ICCID) of the connected device 103. The new profile may be created by and/or stored on a provisioning server 319 of the MNO 301. For example, the provisioning server 319 may be SM-DP server.

In 323, the service provider 306 and/or the MNO 301 may transmit to the user a resource address that leads to and/or is associated with the new profile. By following the link, such as in a browser, the connected device 301 of the user may be triggered to invoke the LPA and/or download the profile. The user may do this, for example, once they have arrived at the travel destination. Additionally, or alternatively, the connected device 301, service provider 306, MNO 301, and/or any associated system may detect that the user has arrived at the travel destination and send the resource address to the user. Additionally, or alternatively, the new profile may not be available and/or usable to the user until the user has arrived at the travel destination.

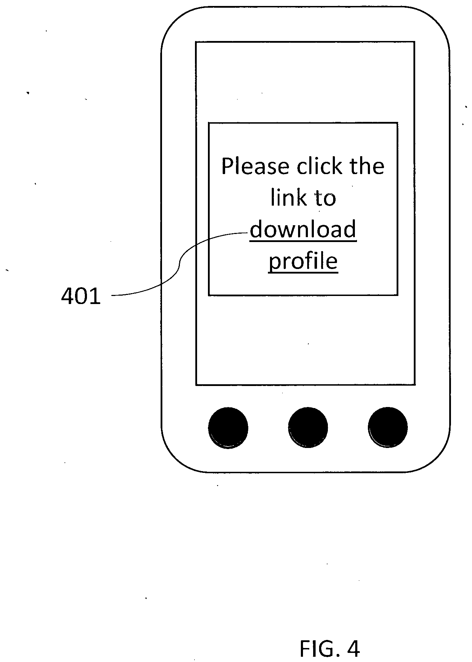

FIG. 4 demonstrates an exemplary connected device 103. In the illustration, the connected device 103 is displaying a message related to the activation process. Embedded within the message may be the resource address. For example, in the illustration, the resource address is embedded in the underlined portion of the text 401, which is conventionally understood to be a link. The message and/or resource address may have been received from the backend server. The resource address may be accessed from the connected device 103, allowing the connected device 103 to natively engage the activation process.

In an aspect of the disclosure, the LPA may be configured to listen to a particular deeplink to be able to start downloading/activating of the eSIM-Subscription profile. The deeplink may be invoked from any medium such as web page, mobile application, email or SMS. Wherever the deeplink is clicked/triggered, the LPA may be invoked and do the profile downloading/activating according to the values passed by the deeplink.

## Claims

1. A method for activating a profile of a connected device (103) of a user, comprising:
transmitting, by the service provider (306), a resource address to the user, accessing, by the connected device (103), the resource address, launching, by the connected device (103), an application,
downloading to the mobile device (103), by the application, a profile, and
activating on the mobile device (103), by the application, the profile.

2. The method of claim 1, further comprising that the resource address is a deeplink.

3. The method of claims 1 or 2, further comprising that the resource address is sent to the connected device (103) using a personal information of the user.

4. The method of claim 3, wherein the resource address is received directly to the connected device as a web page, mobile application, e-mail, or SMS.

5. The method of claim 4, wherein the resource address is accessible on a screen of the connected device (103).

6. The method of any of claims 1 to 5, wherein the connected device (103) is configured to connected to a first network, and the profile is for connecting to a second network.

7. The method of claim 6, wherein the method is triggered by the service provider (306) receiving information that a user of the connected device (103) wants the connected device (103) to connect to the second network.

8. The method of any of claims 1 to 7, wherein the service provider (306) is a mobile network operator (301).

9. The method of any of claims 1 to 7, wherein the service provider (306) is separate from a mobile network operator (301).

10. The method of any of claims 1 to 9, wherein the connected device (103) automatically accesses the resource address when the resource address is received by the connected device.

11. The method of any of claims 1 to 9, wherein the resource address is accessed by the connected device (103) after an initiation action by the user without the need for an intermediary or third party device to facilitate access to the resource address by the connected device (103).

12. The method of any of claims 1 to 11, wherein the application is a local profile assistant.

13. A system comprising a connected device (103) and a backend server (106), wherein the system is configured to activate a profile on the connected device in accordance with the method of any of claims 1-12.

14. The system of claim 13, wherein the backend server (106) is operated by a service provider (306).

15. The system of claim 13, wherein the service provider (306) is a mobile network operator (301).
